# EUROPÄISCHE PATENTSCHRIFT

(11) **EP 1 866 220 B1**
(45) Veröffentlichungstag und Bekanntmachung des Hinweises auf die Patenterteilung: **01.06.2011**
(21) Anmeldenummer: 06706370.1
(22) Anmeldetag: 24.01.2006
(51) Int. Cl.: B65G 1/137

(54) **KOMMISSIONIERVERFAHREN UNTER VERWENDUNG VON RFID**
COMMISSIONING METHOD USING RFID
PROCEDE DE PREPARATION DE COMMANDE FAISANT INTERVENIR L'UTILISATION DE RFID

(30) Priorität: 18.02.2005 AT 2722005
(43) Veröffentlichungstag der Anmeldung: 19.12.2007
(73) Patentinhaber: SSI Schäfer Peem GmbH, 8051 Graz-Gösting (AT)
(72) Erfinder: SCHÄFER, Gerhard, 57290 Neunkirchen (DE)
(74) Vertreter: Wegener, Markus
(86) Internationale Anmeldenummer: PCT/EP2006/000571
(87) Internationale Veröffentlichungsnummer: WO 2006/087073

(56) Entgegenhaltungen:
- DE-A1- 3 317 087
- DE-A1- 3 533 382
- DE-A1- 3 711 237
- DE-A1- 10 200 912

## Beschreibung

Die Erfindung betrifft ein Verfahren zum Kommissionieren von Waren unterschiedlicher Warensorten und jeweils unterschiedlicher Produktionschargen, bei dem die Waren jeweils sortenrein in Abgabevorrichtungen stapelförmig gelagert, den Abgabevorrichtungen gemäß eines Kommissionierauftrages entnommen und zu einer Ausgabestelle befördert werden, wobei die Entnahme der Waren aus der Abgabevorrichtung von einem Stapelende erfolgt, und die Zufuhr der Waren zur Abgabevorrichtung zum jeweils anderen Stapelende, gemäß dem Oberbegriff von Anspruch 1.

Ein solches Verfahren ist z.B. aus der DE 3 317 087 A1 bekannt.

Ferner wird eine Kommissionieranlage zum Kommissionieren von Waren unterschiedlicher Warensorten und jeweils unterschiedlichen Produktionschargen offenbart, wobei die Kommissionieranlage derart ausgebildet ist, dass zu jedem Kommissionierauftrag Chargeninformationen abrufbar sind.

Verfahren dieser Art, bei denen Waren verschiedener Warensorten zunächst jeweils sortenrein aus einer Produktionsanlage oder einem Vorratslager angeliefert und in einer Kommissionieranlage zu Kommissionieraufträgen enthaltend Waren unterschiedlicher Warensorten zusammengestellt werden müssen, sind hinlänglich bekannt. Dabei bedient sich die Kommissionieranlage Abgabevorrichtungen, in denen jeweils sortenrein eine bestimmte Warensorte etwa stapelförmig gelagert wird.

Die Waren einer bestimmten Warensorte entstammen zumeist unterschiedlichen Produktionschargen (auch "Patches" genannt), wobei es mitunter relevant sein kann, welcher Produktionscharge die ansonsten sortenreinen Waren angehören. Ein Beispiel hierfür sind etwa Waren mit einem Mindesthaltbarkeits- oder Ablaufdatum, z.B. Arzneimittel. Bei der Zusammenstellung eines Kommissionierauftrages kann es nun entscheidend sein, Waren derselben Warensorte, aber aus unterschiedlichen Produktionschargen, nicht in demselben Kommissionierauftrag zu vermengen, oder diesen Kommissionierauftrag zumindest einer Kontrolle zu unterziehen. Des weiteren kann es wünschenswert sein zu wissen, an welchen Kunden Ware aus welcher Produktionscharge ergangen ist. Hierfür müssen aber Kommissionieraufträge enthaltend Waren aus unterschiedlichen Produktionschargen erkannt und gegebenenfalls von den übrigen Kommissionieraufträgen selektiert werden.

Das Dokument DE 102 00 912 A1 offenbart ein Verfahren und eine Vorrichtung zum Erkennen und Steuern von mit einem Code versehenen Stützgütern vorzugsweise in einer Kommissionieranlage. Bei einem Verfahren und einer Vorrichtung zum Erkennen und gegebenenfalls Steuern von mit einem Code versehenen Stückgütern, vorzugsweise von in einer Kommissionieranlage kommissionierten Stückgütern eines kompletten Kommissionierauftrags, wird vorgeschlagen, dass eine Menge an mit jeweils einem Transponder mit eigenem Code versehenen Stückgütern vorzugsweise dicht beieinander liegend auf einer Fördereinrichtung durch ein elektromagnetisches Feld zumindest einer Sende-/Empfangsantenne gefördert und dabei durch eine an einen übergeordneten Steuerrechner angeschlossene Steuer-/Empfangs-Einheit automatisch erkannt und gegebenenfalls anschließend durch Steueraktionen des Steuerrechners vorzugsweise in Verbindung mit einem Industrie-PC weiterbehandelt wird.

Es ist daher das Ziel der Erfindung, ein solches Verfahren vorzusehen, bei dem einzelne Kommissionieraufträge, die Waren aus unterschiedlichen Produktionschargen enthalten, nächverfolgbar und gegebenenfalls selektierbar sind, um sie einer entsprechenden Nachkontrolle zu unterziehen. Dieses Verfahren sollte außerdem Möglichkeiten zur Automatisierung bieten. Diese Ziele werden durch die Merkmale von Anspruch 1 erreicht.

Anspruch 1 bezieht sich hierbei auf ein Verfahren zum Kommissionieren von Waren unterschiedlicher Warensorten und jeweils unterschiedlicher Produktionschargen, bei dem die Waren jeweils sortenrein in Abgabevorrichtungen stapelförmig gelagert, den Abgabevorrichtungen gemäß eines Kommissionierauftrages entnommen und zu einer Ausgabestelle befördert werden, wobei die Entnahme der Waren aus der Abgabevorrichtung von einem Stapelende erfolgt, und die Zufuhr der Waren zur Abgabevorrichtung zum jeweils anderen Stapelende. Erfindungsgemäß ist im Rahmen eines solchen gattungsgemäßen Verfahrens vorgesehen, dass bei einem Wechsel der Produktionscharge der Waren entlang des Stapels nur die erste Ware der neuen Produktionscharge mit einem Signalgeber versehen wird, der mit einem entlang des Beförderungsweges zwischen der Abgabevorrichtung und der Ausgabestelle angeordneten Lesegeräts zusammenwirkt, wobei bei Detektion des Signalgebers einer Ware einer Warensorte durch das Lesegerät der entsprechende Kommissionierauftrag einer Kontrollstelle zugeführt werden kann, wenn bei dem entsprechenden Kommissionierauftrag mehrere Waren der entsprechenden Warensorte entnommen wurden. Aufgrund der stapelförmigen Lagerung innerhalb der Abgabevorrichtung werden Waren der betreffenden Warensorte geordnet entnommen, und zwar immer aus der betreffenden Produktionscharge. Sind jedoch alle Waren dieser Produktionscharge aufgebraucht, so wird von einem letzten Warenstück dieser Produktionscharge zum ersten Warenstück einer neuen Produktionscharge ein Wechsel der Produktionscharge stattfinden. Ein Kommissionierauftrag, der jene Waren dieser Warensorte enthält, bei denen ein Wechsel der Produktionscharge vollzogen wurde, wird somit jenes Warenstück beinhalten, das mit dem Signalgeber markiert wurde. Wird auf dem Beförderungsweg zwischen der Abgabevorrichtung und der Ausgabestelle ein entsprechendes Lesegerät angeordnet, so kann genau dieser Kommissionierauftrag identifiziert und einer nachfolgenden Kontrolle zugeführt werden.

In der Kontrollstelle liegt somit ein Kommissionierauftrag vor, in dem sich Waren aus derselben Warensorte, aber aus unterschiedlichen Produktionschargen befinden. Um nun die Identifikation der zu kontrollierenden Waren zu erleichtern, können die Merkmale von Anspruch 2 vorgesehen sein, denen zu Folge die Waren vor der Zufuhr zur jeweiligen Abgabevorrichtung mit einer Sortenkennung zur Identifizierung der Warensorte versehen werden, und der Signalgeber von einem elektronischen Verwaltungssystem einer Sortenkennung zugeordnet wird, wobei bei Detektion des Signalgebers die entsprechende Sortenkennung vom Verwaltungssystem ermittelt und der Kontrollstelle bereitgestellt wird. Damit ist an der Kontrollstelle bekannt, welche Warensorte zu überprüfen ist, was die Kontrolle entscheidend erleichtert.

Des weiteren ist es vorteilhaft, wenn bereits bei der Zufuhr neuer Waren einer Warensorte zu einer Abgabevorrichtung ersichtlich ist, ob Waren einer neuer Produktionscharge zugeführt werden. Vorzugsweise sollte dies automatisch erfolgen. Daher ist gemäß Anspruch 3 vorgesehen, dass die Waren vor der Zufuhr zur jeweiligen Abgabevorrichtung zusätzlich mit einer Chargenkennung zur Identifizierung der Produktionscharge versehen werden, wobei das elektronische Verwaltungssystem bei der Zufuhr neuer Waren zur jeweiligen Abgabevorrichtung die Chargenkennung der zuzuführenden Waren mit jenen der in der Abgabevorrichtung bereits vorhandenen Waren vergleicht, und das Vorliegen unterschiedlicher Produktionschargen signalisiert. Falls die Zufuhr neuer Waren zur Abgabevorrichtung automatisiert erfolgt, kann die entsprechende Chargenkennung automatisch an das Verwaltungssystem übermittelt werden und das Vorliegen unterschiedlicher Produktionschargen innerhalb des Verwaltungssystems vermerkt oder auch signalisiert, etwa in Form einer Mitteilung an die entsprechende Abgabevorrichtung. Erfolgt die Zufuhr neuer Waren zur Abgabevorrichtung manuell, so kann die Bereitstellung der Chargenkennung, etwa über Funk oder über eine Datenverbindung anderer Art, auch durch eine Bedienperson erfolgen, die in weiterer Folge auch das Signal über das Vorliegen unterschiedlicher Produktionschargen erhält.

Die Merkmale von Anspruch 3 ermöglichen auch eine weitere vorteilhafte Ausführungsform, wie sie in Anspruch 4 vorgeschlagen wird. Anspruch 4 sieht vor, dass bei Detektion des Signalgebers die entsprechende Sortenkennung sowie die entsprechende Chargenkennung vom Verwaltungssystem ermittelt und der Kontrollstelle bereitgestellt wird. Somit liegt der Kontrollstelle nicht nur Information über die Warensorte, bei der eine Vermengung unterschiedlicher Produktionschargen gegeben ist, vor, sondern auch über die unterschiedlichen Produktionschargen selbst.

Des weiteren kann es vorteilhaft sein, auch die Abgabevorrichtung mit einer Kennung identifizierbar zu machen, die in weiterer Folge als Automatenkennung bezeichnet wird. Anspruch 5 sieht daher vor, dass die Abgabevorrichtungen jeweils mit einer Automatenkennung versehen werden, wobei das elektronische Verwaltungssystem eine Zuordnung zwischen der Automatenkennung und der Sortenkennung der in der betreffenden Abgabevorrichtung gelagerten Warensorte vornimmt. Da in einer Abgabevorrichtung nur sortenreine Waren abgelegt werden, ist über die Automatenkennung auch eine bestimme Warensorte identifiziert.

Eine vorteilhafte Ausnutzung einer Ausführungsform gemäß Anspruch 5 wird etwa in Anspruch 6 vorgeschlagen. Anspruch 6 sieht vor, dass bei der Zufuhr neuer Waren zu einer Abgabevorrichtung und bei der Entnahme von Waren aus dieser Abgabevorrichtung dem elektronischen Verwaltungssystem die entsprechenden Stückzahlen übermittelt werden, wobei das Unterschreiten einer Mindestanzahl von Waren in dieser Abgabevorrichtung unter Angabe der entsprechenden Automatenkennung signalisiert wird. Somit kann die bevorstehende Entleerung einer Abgabevorrichtung und somit eine notwendige Zufuhr neuer Waren der entsprechenden Warensorte leicht ermittelt werden. Die Signalisierung kann etwa bei vollautomatisierten Anlagen für eine entsprechende Ansteuerung einer Zufuhreinrichtung verwertet werden, oder bei manueller Befüllung zur Benachrichtigung einer Bedienperson dienen. Da die Automatenkennung übermittelt wird, ist der Bedienperson eine leichte Identifizierung der zu befüllenden Abgabevorrichtung möglich.

Mitunter wird es vorteilhaft oder sogar notwendig sein, bei Anlieferung von Waren aus der Produktionsanlage oder aus einem Vorratslager zur Kommissionieranlage diese Waren zunächst in Vorratsregalen der Kommissionieranlage zu lagern, bevor sie für eine Befüllung der Abgabevorrichtungen herangezogen werden. Für diese Fälle sieht Anspruch 7 vor, dass die Waren vor der Zufuhr zur Abgabevorrichtung in Vorratsregalen gelagert werden, die jeweils mit einer Regalkennung versehen werden, wobei das elektronische Verwaltungssystem eine Zuordnung zwischen der Regalkennung sowie der Sorten- und Chargenkennung der in dem betreffenden Vorratsregal gelagerten Waren vornimmt. Im Verwaltungssystem ist somit genau verzeichnet, welche Waren einer bestimmten Warensorte aus welcher Produktionscharge stammen, und auf welchem Vorratsregal sie gelagert sind.

Das erweist sich besonders dann vorteilhaft, wenn nun die Abgabevorrichtungen mit Waren, die in Vorratsregalen abgelegt worden sind, befüllt werden muss. Gemäß Anspruch 8 kann nämlich nun vorgesehen werden, dass bei der Zufuhr neuer Waren von einem Vorratsregal zu einer Abgabevorrichtung die entsprechende Regal- und Automatenkennung dem elektronischen Verwaltungssystem übermittelt wird, das aus der Regalkennung die Sorten- und Chargenkennung und aus der Automatenkennung die Chargenkennung der in der Abgabevorrichtung bereits vorhandenen Waren ermittelt, und das Vorliegen unterschiedlicher Produktionschargen signalisiert.

Gemäß Anspruch 9 kann als Signalgeber ein RFID-Transponder verwendet werden. Gemäß der Ansprüche 10, 11, 12 und 13 wird vorgeschlagen, dass als Sorten-, Chargen-, Automaten- oder Regalkennung jeweils ein Strichcode-Etikett bzw. der von ihm abgeleitete Zahlencode verwendet wird.

Ferner wird außerdem eine Kommissionieranlage zum Kommissionieren von Waren unterschiedlicher Warensorten und jeweils unterschiedlicher Produktionschargen vorgeschlagen wobei die Anlage aufweist: zumindest eine Abgabevorrichtung, in der die Waren stapelförmig lagerbar sind, um von einem Stapelende zu Kommissionierzwecken entnommen und an einem anderen Stapelende zum Nachfüllen zugeführt zu werden; einem Transponder, der an einer vorbestimmten Ware einer jeweiligen Produktionscharge angebracht wird und eine mit der Produktionscharge verknüpfte. Information trägt; und einem Lesegerät zum Erfassen des Transponders.

Diese Anlage ermöglicht es somit, dass Waren unterschiedlicher Produktionschargen nachverfolgt und ggf. selektiert werden können. Ein der Kommissionieranlage übergeordnetes Lagerverwaltungssystem, welches auf einem Lagerverwaltungsrechner, wie z.B. einem Großrechner oder PC, implementiert ist, koordiniert die Kommissionierung von Waren bzw. Artikeln gemäß Kommissionieraufträgen. Beim Auswurf einer mit dem Transponder versehenen Ware, d.h. bei einem Chargenwechsel, verlässt der Transponder zusammen mit der Ware die Abgabevorrichtung und wird üblicherweise einem Auftragsbehälter zugeführt. Das Lesegerät liest die in dem Transponder enthaltene Information und liefert diese an das Lagerverwaltungssystem. Somit ist es insbesondere nachträglich immer möglich, nachzuvollziehen, aus welcher Produktionscharge welcher Artikel in einem spezifischen Kommissionierauftrag gelangt.

Vorzugsweise weist die Kommissionieranlage ferner eine Förderstrecke, insbesondere ein Sammelband auf, auf die die Abgabevorrichtung zu kommissionierende Waren abgibt, wobei die Förderstrecke derart am Lesegerät vorbeigeführt wird, dass der Transponder und das Lesegerät, insbesondere elektromagnetisch, miteinander wechselwirken können.

Auf diese Weise kann immer gewährleistet werden, dass ein Transponder beim Passieren des Lesegeräts sicher erfasst wird. Durch die feste Anordnung der Förderstrecke und des Lesegeräts zueinander ist es nahezu ausgeschlossen, dass der Transponder das Lesegerät in einem Bereich passiert, in welchem das Lesegerät den Transponder nicht detektieren kann.

Gemäß einer bevorzugten Ausführungsform handelt es sich bei dem Transponder um einen passiven Transponder.

Passive Transponder zeichnen sich dadurch aus, dass sie keine eigene Energieversorgung umfassen. Dadurch baut der Transponder kleiner. Eine geringe Baugröße ist insbesondere dann von Interesse, wenn die Anzahl eines bestimmten Warentyps in einem Kommissionierschacht mittels einer Entfernungsmessung des oberen Endes des Kommissionierschachts relativ zu der Ware stattfindet, die sich am oberen Ende des Warenstapels befindet.

Ein weiterer Vorteil liegt darin, dass die Transponder im Kommissioniersystem immer wieder verwendet werden können. Dazu werden die Transponder nach erfolgter Erfassung durch das Lesegerät aus dem Warenstrom entnommen, vorzugsweise, bevor die Waren in den Auftragsbehälter gegeben werden.

Außerdem hat es sich als vorteilhaft herausgestellt, wenn der Transponder zwei Richtantennen umfasst, die so zueinander angeordnet sind, dass sie im Wesentlichen senkrecht zueinander strahlen.

Durch zwei senkrecht zueinander stehende Richtantennen erhöht sich die Wahrscheinlichkeit, dass das Lesegerät auch tatsächlich ein Signal vom Transponder empfängt. Insbesondere im Pharma-Großhandel werden große Mengen von verschiedenen Medikamenten, die die Waren darstellen, pro Kommissionierauftrag abgerufen. So kann es geschehen, dass, wenn alle Waren eines Kommissionierauftrags zusammengestellt sind, der Transponder von einer oder mehreren Waren abgedeckt wird. Dies ist besonders dann problematisch, wenn sogenannte Blister-Verpackungen verwendet werden, die Metallfolien aufweisen. Die Metallfolien wirken bei elektromagnetischer Strahlung isolierend.

Da die zwei Antennen senkrecht zueinander stehende Hauptstrahlungsrichtungen haben, erhöht sich somit die Wahrscheinlichkeit, dass das Lesegerät zumindest die Signale einer der Richtantennen empfängt.

Vorzugsweise weisen die Richtantennen jeweils einen Ferritkern auf.

Der Ferritkern verstärkt die magnetische Komponente der elektromagnetischen Strahlung, so dass sich die Wahrscheinlichkeit einer Signaldetektion merklich erhöht.

Gemäß einer weiteren Ausführungsform ist der Transponder in eine Trägerstruktur integriert, die insbesondere aus Kunststoff hergestellt ist. Die Geometrie der Trägerstruktur ist zumindest in solchen Bereichen der Struktur an die Geometrie der zu kommissionierenden Ware angepasst, in denen ein Kontakt zwischen der Trägerstruktur und der zu kommissionierenden Ware stattfindet.

Auf diese Weise ist gewährleistet, dass der Transponder lose an der zu markierenden Ware angebracht werden kann. Dies ermöglicht eine Aussortierung der Transponder nach erfolgter Detektion. Die Transponder können von der Ware gelöst werden, ohne die Ware zu beschädigen.

Als vorteilhaft hat es sich herausgestellt, wenn die Trägerstruktur einen L-förmigen Querschnitt aufweist und des Weiteren lösbar an der Ware angebracht wird, so dass sich die Ware und die Trägerstruktur nach erfolgter Abgabe aus der Abgabevorrichtung selbsttätig voneinander trennen.

Eine häufig verwendete Warenform ist der Quader. Insbesondere Medikamente bzw. Arzneimittel werden in quaderförmigen Verpackungen verpackt. Entspricht die Trägerstruktur einem im Wesentlichen rechtwinkligen Winkel, so lässt sich diese einfach an einer der Kanten der Verpackung ausrichten und sicher mit dieser lose verbinden. Insbesondere wenn mehrere Medikamente in einem Kommissionierschacht gestapelt werden, kann die Trägerstruktur an der ersten Ware einer Produktionscharge gesichert werden.

Weiter ist es von Vorteil, wenn die Abgabevorrichtung ein Kommissionierautomat, insbesondere ein A-Frame, ein Multitec, ein K-Pemat, usw. mit mindestens einem Warenschacht ist.

Ein Kommissionierautomat lässt sich mit einem übergeordneten Lagerverwaltungssystem auf einfache Weise automatisiert betreiben. Somit kann das gesamte Verfahren bzw. die Anlage automatisiert betrieben werden. Die Kommissionierautomaten Multitec und K-Pemat werden von der Firma SSI Schäfer Peem, Graz, Österreich hergestellt.

Gemäß einer weiteren bevorzugten Ausführungsform ist am unteren Ende des Warenschachts eine Vereinzelungseinrichtung zum automatisierten Ausgeben einzelner Waren vorgesehen.

Die Vereinzelungseinrichtung in Form einer Auswurfautomatik erhöht den Automatisierungsgrad weiter und unterstützt auch den Auswurf des Transponders.

Weiter ist es bevorzugt, wenn das Lesegerät zwei Antennen umfasst, die einander gegenüberliegend angeordnet sind.

Insbesondere sind die beiden Antennen oberhalb und unterhalb der Förderstrecke angeordnet. Auf diese Weise ist sichergestellt, dass von dem Transponder ausgesandte Signale mit großer Wahrscheinlichkeit zumindest von einer Antenne detektiert werden. Somit ist es nahezu unmöglich, dass ein Transponder durch den Bereich des Lesegeräts läuft, ohne detektiert zu werden.

Gemäß einer noch weiteren bevorzugten Ausführungsform ist die Förderstrecke mehrteilig aufgebaut und zwischen einigen der Teile sind elektrische Isolatoren vorgesehen.

Dadurch werden geschlossene elektrische Kreise vermieden, die im Wege der Induktion die Antennen des Lesegeräts stören könnten. So ist sichergestellt, dass die Antennen die Transpondersignale auf jeden Fall ungestört detektieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer möglichen Ausfüh- rungsform für eine Kommissionieranlage zur Durchfüh- rung des erfindungsgemäßen Verfahrens von oben gese- hen,
- Fig. 2: eine schematische Darstellung der Frontalansicht einer Abgabevorrichtung,
- Fig. 3: ein Flussdiagramm zur Zusammenfassung von Verfahrens- schritten betreffend die Anlieferung von Waren an die Kommissionieranlage,
- Fig. 4: ein Flussdiagramm zur Zusammenfassung von Verfahrens- schritten betreffend die Nachfüllung der Abgabe- vorrichtung,
- Fig. 5: ein Flussdiagramm zur Zusammenfassung von Verfahrens- schritten betreffend die Zusammenstellung und Über- prüfung von Kommissionieraufträgen.
- Fig. 6: eine schematische perspektivische Ansicht eines winkelförmigen Transponders,
- Fig. 7: eine Seitenansicht auf eine Stirnseite eines Kommis- sionierungsautomats, und
- Fig. 8: eine schematische perspektivische Ansicht auf ein Lesegerät, welches in einer Kommis- sionieranlage verwendet wird.

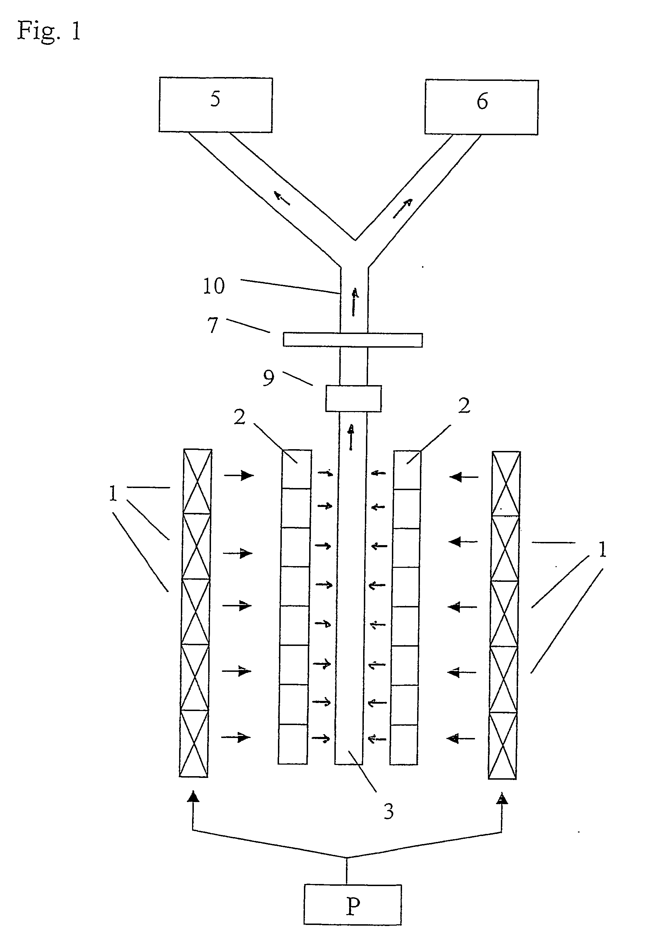

In der Fig. 1 ist eine schematische Darstellung einer möglichen Ausführungsform für eine Kommissionieranlage zur Durchführung des erfindungsgemäßen Verfahrens dargestellt. Es wird aber angemerkt, dass die Ausführung der Kommissionieranlage variieren kann, auch hinsichtlich der Verteilung von automatisierten und manuellen Verfahrensabläufen. Aus einer Produktionsanlage bzw. einem Vorratslager P werden Waren 4 der Kommissionieranlage zugeführt. Die Waren 4 werden jeweils sortenrein angeliefert, können aber aus unterschiedlichen Produktionschargen stammen. Die Warensorten 4 werden jeweils mit einer Sortenkennung, z.B. einer Artikelnummer, gekennzeichnet. Die Artikelnummer unterscheidet aber in der Regel nicht zwischen Waren unterschiedlicher Produktionschargen. Daher wird für jede Ware 4 auch eine Chargenkennung angegeben, die darüber Auskunft gibt, aus welcher Produktionscharge sie stammt. Artikel- und Chargennummer können etwa mithilfe eines Strichcode-Etiketts (Barcode) auf der Ware 4 vermerkt sein. Im folgenden wird unter der Bezeichnung "Sortenkennung" bzw. "Chargenkennung" sowohl das physische Strichcode-Etikett, als auch die damit codierte Nummer verstanden. Ist etwa davon die Rede, dass eine Ware 4 mit einer "Sortenkennung" versehen wird, so ist darunter sowohl das Anbringen etwa eines Strichcode-Etiketts gemeint, als auch die Zuordnung eines entsprechenden Zahlencodes. Unter "Übermittlung" z.B. der Sortenkennung, etwa an ein elektronisches Verwaltungssystem, wird daher verstanden, dass der Zahlencode übermittelt wird, aber selbstredend nicht das physische Strichcode-Etikett.

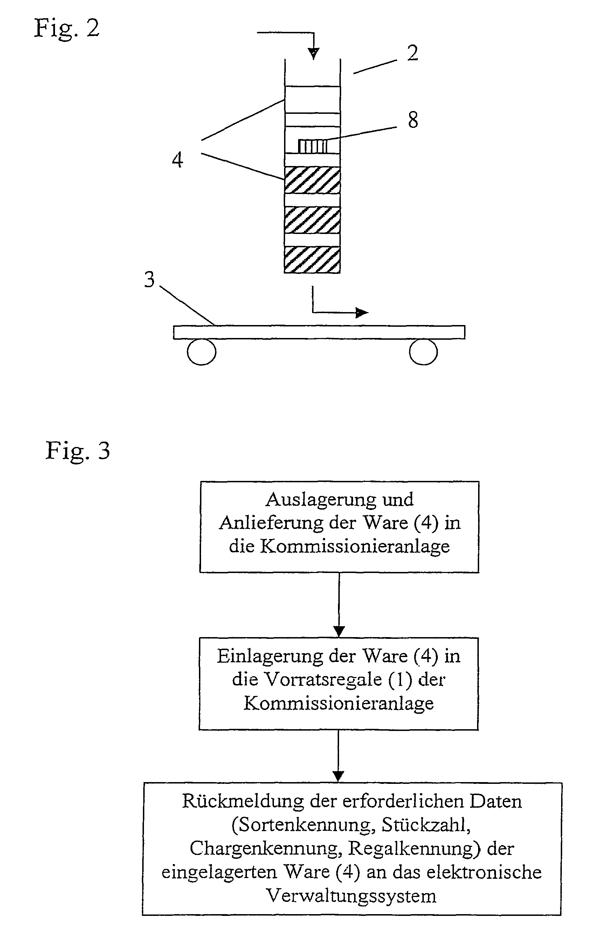

Die Waren 4 werden in der Kommissionieranlage auf unterschiedliche Vorratsregale 1 verteilt, wobei die Vorratsregale 1 mit einer Regalkennung, etwa ebenfalls in Form eines Strichcode-Etiketts, versehen sind. Im elektronischen Verwaltungssystem, das etwa mithilfe entsprechender Software auf einem Computer verwirklicht ist und gegebenenfalls auch über Steuerungs- und Regelungsfunktionen verfügen kann, wird die Artikel- und Chargennummer gemeinsam mit der entsprechenden Regalkennung gespeichert. Es ist daher genau festgelegt, welche Ware 4 aus einer Warensorte und einer bestimmten Produktionscharge sich auf welchem Lagerungsort innerhalb der Vorratsregale 1 befindet. Die Strichcodes können von einer Bedienperson abgelesen, etwa eingescannt, und etwa mithilfe eines Funkterminals an das Verwaltungssystem geschickt werden, wo sie ausgewertet und die Auswerteergebnisse an die Bedienperson zurück geschickt werden können. Dieser Anlieferungsvorgang ist auch in der Fig. 3 illustriert.

Von den Vorratsregalen 1 können die Abgabevorrichtungen 2 mit Waren 4 beschickt werden, und zwar entweder manuell oder automatisiert. Im folgenden wird von einer manuellen Befüllung der Abgabevorrichtungen 2 mit den Waren 4 ausgegangen. In den Abgabevorrichtungen 2, die auch als "Kommissionierautomaten" bezeichnet werden (z.B. sogenannte "A-Frames", wie sie in der pharmazeutischen Industrie eingesetzt werden), lagern die Waren 4 in einem Schacht stapelförmig übereinander. Eine schematische Darstellung einer solchen Abgabevorrichtung 2 ist etwa in der Fig. 2 dargestellt. Der jeweils unterste Artikel 4 wird durch eine automatische Auswerfvorrichtung einer Fördereinrichtung 3, etwa ein Förderband, zugeführt. Die Steuerung der Auswerfvorrichtung erfolgt über das Verwaltungssystem, in dem auch die einzelnen Kommissionieraufträge, also eine bestimmte Zusammensetzung einer bestimmten Anzahl von Waren 4 unterschiedlicher Warensorten, verzeichnet sind. Vorzugsweise wird auch jeder Abgabevorrichtung 2 eine Kennung zugeordnet, die eine Identifizierung einer bestimmten Abgabevorrichtung ermöglicht, und im folgenden als Automatenkennung bezeichnet wird. Auch diese Kennung kann etwa mithilfe eines Strichcodes erfolgen.

Bei der Zufuhr neuer Waren 4 zu einer Abgabevorrichtung 2 und bei der Entnahme von Waren 4 aus dieser Abgabevorrichtung 2 werden dem elektronischen Verwaltungssystem die entsprechenden Stückzahlen übermittelt, wobei das Unterschreiten einer Mindestanzahl von Waren 4 in dieser Abgabevorrichtung 2 unter Angabe der entsprechenden Automatenkennung signalisiert wird. Somit kann die bevorstehende Entleerung einer Abgabevorrichtung 2 und somit eine notwendige Zufuhr neuer Waren 4 der entsprechenden Warensorte leicht ermittelt werden. In diesem Fall erfolgt bei manueller Befüllung der Abgabevorrichtungen 2 eine Benachrichtigung der Bedienperson. Da die Automatenkennung übermittelt wird, ist der Bedienperson eine leichte Identifizierung der zu befüllenden Abgabevorrichtung 2 möglich.

Durch Scannen des entsprechenden Automatencodes wird der Bedienperson der nachzufüllende Artikel 4 angezeigt. Nach dem Einlesen der entsprechenden Regalkennung des diesem Artikel 4 zugeordneten Vorratsregals 1 wird durch das elektronische Verwaltungssystem der Bedienperson die vorliegende Produktionscharge im Vorratsregal 1 und in der Abgabevorrichtung 2 verglichen. Unterscheiden sich die Produktionschargen, so wird dies der Bedienperson mitgeteilt. In diesem Fall wird der erste Artikel 4 der neuen Produktionscharge mit einem Signalgeber 8 versehen und in der Abgabevorrichtung 2 auf die Artikel 4 der vorangegangenen Produktionscharge gelegt.

Beim Signalgeber 8 kann es sich etwa um einen RFID (Radio Frequency Identification)-Transponder handeln. Transponder bestehen aus einem Computerchip mit Prozessor und Betriebssystem sowie einem Sender und Empfänger mit Antenne zum berührungslosen Auslesen des Chips. Dabei werden passive Transponder und aktive Transponder unterschieden, wobei letztere mit einer Stromversorgung (Batterie) ausgestattet sind. Gibt ein RFID-Lesegerät ein Funksignal ab, so antwortet der passive Transponder, indem er die in ihm gespeicherten Daten an das Lesegerät sendet. Im folgenden wird davon ausgegangen, dass als Signalgeber 8 ein passiver Transponder verwendet wird.

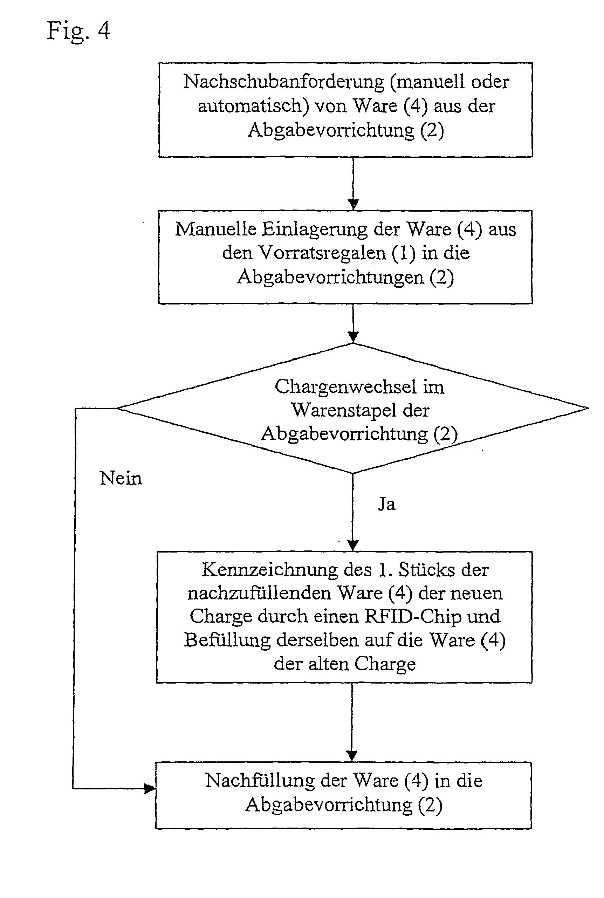

Auch der Signalgeber 8 kann mit einem Strichcode versehen werden. Durch Scannen des Strichcode-Etiketts am RFID-Transponder 8 und der Automatenkennung werden Abgabevorrichtung 2 und Transponder 8 datentechnisch miteinander verknüpft. Der Schacht der Abgabevorrichtung 2 wird daraufhin mit der Ware 4 der neuen Produktionscharge aufgefüllt, sodass sich eine Konfiguration wie in der Fig. 2 dargestellt ergibt. Die Waren 4 der vorangegangenen Produktionscharge sind in der Fig. 2 schraffiert gekennzeichnet, und die darüber liegenden Waren 4 der neuen Produktionscharge sind ohne Schraffierung. Eine Kennzeichnung der restlichen Ware durch RFID-Transponder ist nicht erforderlich. Diese Verfahrensschritte sind auch in der Fig. 4 zusammengefasst.

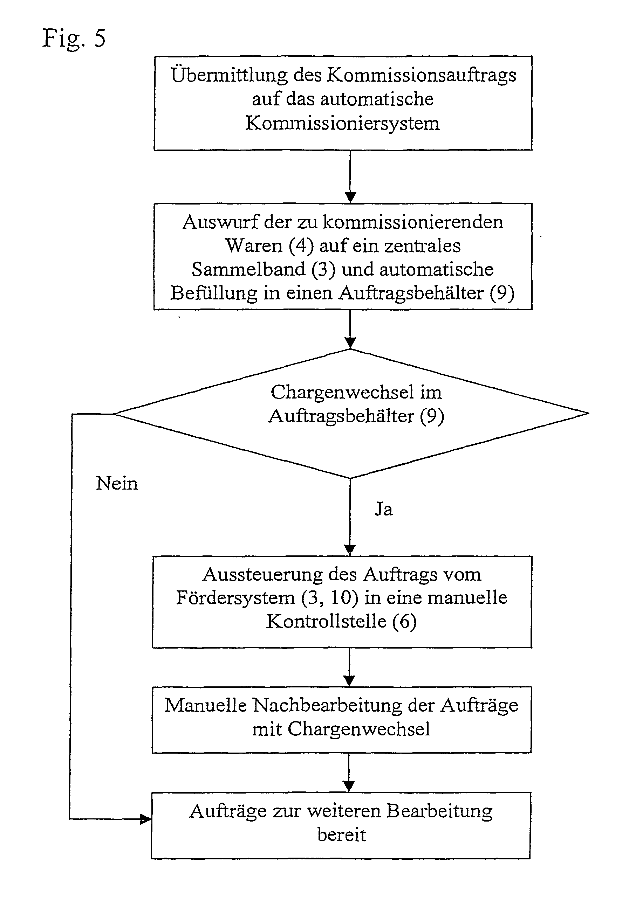

Die ausgewählten Waren 4 eines Kommissionierauftrages werden in einem Auftragsbehälter 9 gesammelt, der mithilfe einer Fördereinrichtung 10 weiter transportiert wird. Der Auftragsbehälter 9 passiert in weiterer Folge ein Lesegerät 7, das die Anwesenheit eines Signalgebers 8 im Auftragsbehälter 9, und somit einen vollzogenen Wechsel einer Produktionscharge einer Warensorte, detektiert. Damit ist bekannt, dass alle weiteren Waren 4 dieser Warensorte einer neuen Produktionscharge angehören, und somit alle Kundenaufträge, die nach diesem Kommissionierauftrag zusammengestellt werden und Waren 4 dieser Warensorte enthalten, der neuen Produktionscharge zuzuordnen sind. Sollten sich in diesem Auftragsbehälter 9, der einen RFID-Transponder 8 enthält, mehrere Waren 4 der entsprechenden Warensorte befinden, so kann dieser Auftragsbehälter 9 einer Kontrollstelle 6 zugeführt werden, wo etwa eine weitere Kontrolle bzw. Bearbeitung durchgeführt werden kann, da nicht sichergestellt ist, ob dieser Kommissionierauftrag ausschließlich Waren 4 aus einer einzigen Produktionscharge enthält, oder eine Mischung aus mehreren Produktionschargen. Diese Verfahrensschritte sind auch in der Fig. 5 zusammengefasst.

Vorzugsweise wird bei Detektion des Signalgebers 8 die entsprechende Sortenkennung sowie die entsprechende Chargenkennung vom Verwaltungssystem ermittelt und der Kontrollstelle 6 bereitgestellt. Somit liegt der Kontrollstelle 6 nicht nur Information über die Warensorte, bei der eine Vermengung unterschiedlicher Produktionschargen gegeben ist, vor, sondern auch über die unterschiedlichen Produktionschargen selbst.

Falls keine Anwesenheit eines Signalgebers 8 vom Lesegerät 7 detektiert wird, so wird der entsprechende Auftragsbehälter 9 der Ausgabestelle 5 zugeführt.

Das erfindungsgemäße Verfahren ermöglicht es somit, einzelne Kommissionieraufträge, die Waren aus unterschiedlichen Produktionschargen enthalten, nachverfolgbar und gegebenenfalls selektierbar zu gestalten, um sie einer entsprechenden Nachkontrolle zu unterziehen. Dieses Verfahren bietet außerdem Möglichkeiten zur weitestgehenden Automatisierung, wie oben dargelegt wurde.

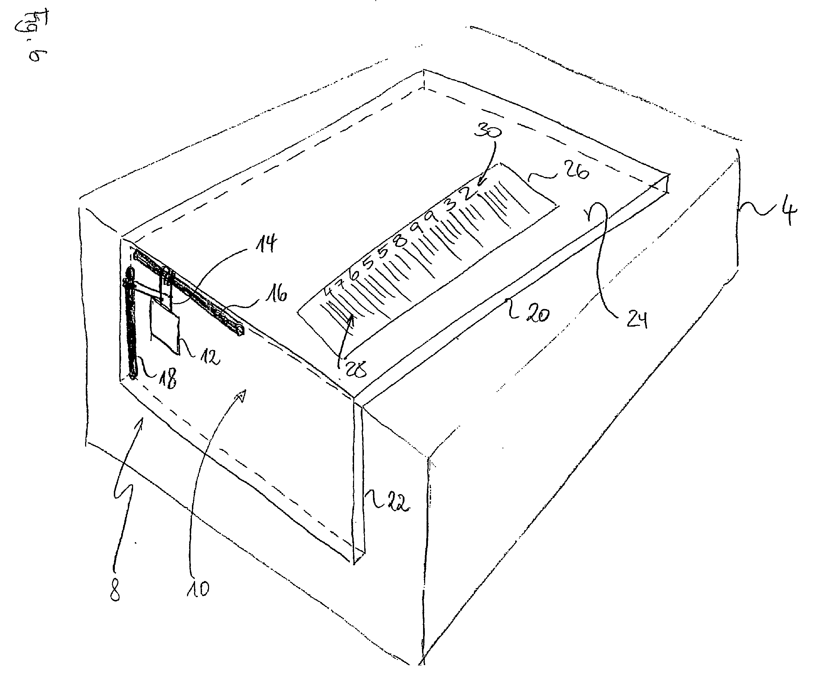

Fig. 6 zeigt eine stark schematisierte Darstellung eines Signalgebers 8, der eine Trägerstruktur 10 umfasst. Der Signalgeber 8 weist des Weiteren einen Chip 12 auf, der unter anderem zur Speicherung der Chargeninformationen dient. Der Chip 12 ist Teil eines Transponders und weist zusätzlich Anschlüsse 14 auf. Die Anschlüsse 14 sind mit Spulenwicklungen verbunden, die zwei Ferritkerne 16 und 18 umgeben.

Die zwei Ferritkerne 16 und 18 dienen als Richtantennen. Ferner wäre es möglich eine dritte Antenne vorzusehen, die zu den beiden Ferritkernen 18 und 16 senkrecht steht. Die Antennen können beliebig zueinander angeordnet werden. Es ist jedoch bevorzugt, wenn sie im Wesentlichen in die drei Richtungen des Raums strahlen.

Die Trägerstruktur 10 ist im Wesentlichen L-förmig ausgebildet. Der längere L-Schenkel ist in der Fig. 6 mit 20 bezeichnet. Der kürzere Schenkel ist mit 22 bezeichnet. Auf der oberen Seite 24 des Schenkels 20 kann optional ein Etikett 26 angebracht werden, welches einen Strichcode 28 und/oder einen Zahlencode 30 tragen kann.

Im Schenkel 22 sind die Antennen 16 und 18 vorzugsweise entlang der Kanten orientiert, die den Teil 22 bilden. In der Fig. 6 ist der Schenkel 22 transparent dargestellt, wie durch die gestrichelte Linie verdeutlicht. In der Regel wird die winkelförmige Trägerstruktur 10 aus Kunststoff hergestellt, in das der Transponder eingegossen ist.

Ferner versteht sich, dass die geometrische Form der Trägerstruktur 10 vorzugsweise an die Form der Ware 4 angepasst ist.

Die in der Fig. 6 dargestellte Ware 4 weist einen quaderförmige Gestalt auf. Deswegen wird vorzugsweise ein Winkel als Trägerstruktur 10 verwendet, die an den Seiten der Ware 4 eng anliegt. Die Form der Trägerstruktur kann jedoch in Abhängigkeit von der Form der Ware 4 variiert werden.

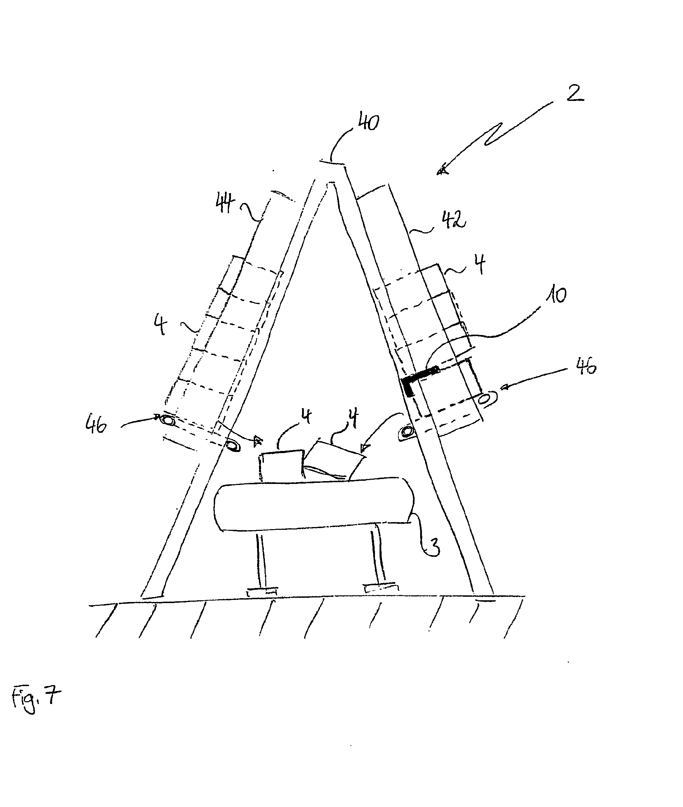

In Fig. 7 ist eine Frontalansicht auf eine Abgabevorrichtung 2 schematisch dargestellt, wie sie exemplarisch in der Fig. 1 gezeigt ist. Bei der Abgabevorrichtung 2 handelt es sich um einen Kommissionierautomaten des Typs "A-Frame". Ein A-Frame weist ein A-förmiges Gestell 40 auf. An den beiden äußeren Schenkeln des Gestells 40 ist jeweils ein Kommissionierschacht 42 bzw. 44 angebracht. Im Kommissionierschacht 42 lassen sich Waren 4 in Form von Stapeln lagern. Am unteren Ende der Kommissionierschächte 42 bzw. 44 ist jeweils eine Auswurfeinrichtung 46 zum Auswerfen von in den Schächten gelagerten Artikeln 4 auf die mittig angeordnete Förderstrecke 3 vorgesehen. Bei der Förderstrecke 3 kann es sich um ein Förderband 3 handeln. Bei der in Fig. 7 dargestellten Kommissionieranlage wird das Sammelband 3 aus der Zeichenebene herausbewegt.

In dem in der Fig. 7 rechts dargestellten Kommissionierschacht 42 ist am unteren Stapelende ein Ware 4 dargestellt, die auf ihrer Oberseite (lose) eine Trägerstruktur 10 inklusive Transponder trägt. Diese Ware 4 stellt den ersten Artikel einer Produktionscharge dar. Alle weiteren Waren, die sich oberhalb dieser ersten Ware 4 mit Trägerstruktur 10 befinden, gehören zur gleichen Produktionscharge.

Es versteht sich, dass die Zuordnung zwischen einer Trägerstruktur 10 und einer Charge auch anders erfolgen kann. So kann z.B. auch der letzte Artikel einer Charge mit der Trägerstruktur 10 versehen werden, so dass das Lagerverwaltungssystem bei Detektion dieser Trägerstruktur 10 ein Signal erhält, das fortan Artikel einer anderen Charge kommissioniert werden. Somit wäre es denkbar, dass der unterste Artikel im Kommissionierschacht 42 der letzte Artikel einer ersten Produktionscharge ist. Der zweitunterste Artikel wäre dann der erste Artikel einer zweiten Produktionscharge. Dies hätte den Vorteil, dass eine (nicht dargestellte) Kommissionierperson die Trägerstruktur 10 beim Befüllen des Schachts 42 mit einer neuen Artikelcharge lediglich auf den obersten Artikel legen müsste.

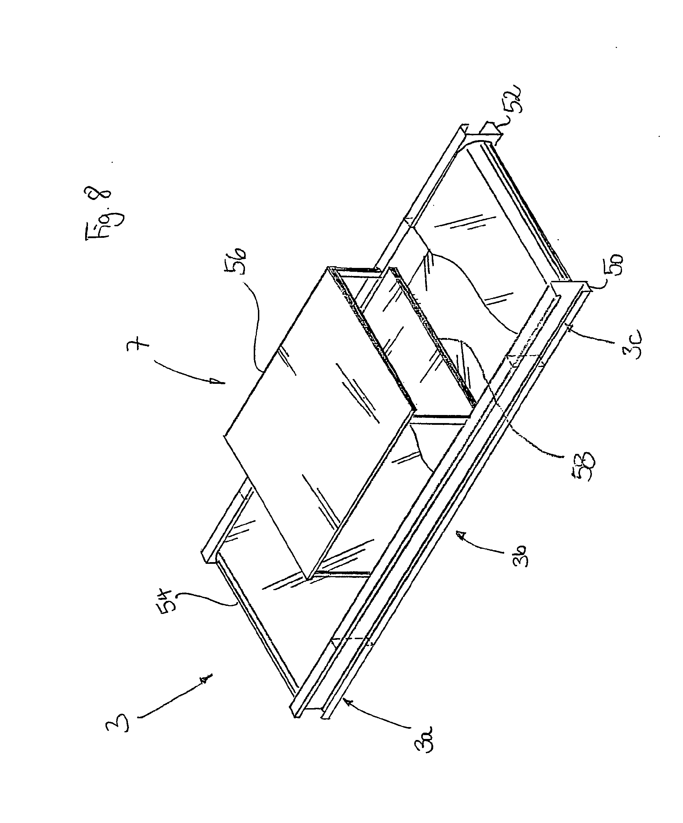

Fig. 8 zeigt eine schematische perspektivische Ansicht eines Lesegeräts 7.

Das Lesegerät 7 ist in unmittelbarer Nähe zu der Förderstrecke 3 angeordnet. In Fig. 8 ist die Förderstrecke 3 wiederum durch ein Sammelband 3 realisiert. Das Sammelband weist seitliche Leisten 50 und 52 auf, die vorzugsweise einen T-förmigen Querschnitt haben. Die in der Fig. 8 dargestellte Dimension entspricht nicht der Realität. Aus Veranschaulichungszwecken ist die longitudinale Länge des Sammelbands 3 stark verkürzt dargestellt.

Das Sammelband 3 kann insbesondere im Bereich des Lesegeräts 7 mehrteilig aufgebaut sein, wie es durch gestrichelte Linien im Bereich der Leisten angedeutet ist. Der mehrteilige Aufbau dient zur Vermeidung von geschlossenen elektrischen Leiterkreisen, die die Funktionsweise des Lesegeräts 7 beeinflussen könnten. Ohne die Unterteilung in mehrere Teile würden die seitlichen Leisten 50 und 52 zusammen mit nicht dargestellten Umlenkrollen eine elektrische Leiterschleife in einer horizontalen Ebene bilden.

Da das Lesegerät 7 üblicherweise im Wege der elektromagnetischen Wechselwirkung mit den Transpondern kommuniziert, könnte es beim Aussenden eines Leseimpuls durch das Lesegerät 7 zu einer magnetischen Induktion in dieser Leiterschleife kommen. Durch die Unterbrechung, die insbesondere durch elektrische Isolatoren verstärkt wird, kann diese magnetische Induktion unterbunden werden. In Fig. 8 sind exemplarisch drei Abschnitte 3a, 3b und 3c des Sammelbands 3 gezeigt, wobei insbesondere im Bereich des Lesegeräts 7 die elektrische Isolation von besonderem Vorteil ist.

Das Lesegerät 7 weist in dem in Fig. 8 gezeigten Beispiel zwei flächige Antennen 56 und 58 auf. Es können jedoch andere Antennen verwendet werden.

Die Antenne 56 ist vorzugsweise oberhalb des Förderbands 54 angeordnet. Die zweite Antenne 58 ist insbesondere unmittelbar unterhalb des Förderbands 54 angeordnet. Zu Veranschaulichungszwecken ist der obere Teil des Förderbands 54 im hinteren Bereich des Lesegeräts 7 geschnitten dargestellt. Die Antennen können beliebig, z.B. auch seitlich, angeordnet sein. Es können auch mehr als zwei Antennen vorgesehen werden. Je mehr Antennen verwendet werden, desto größer wird das Magnetfeld, mit dem die Transponder gelesen werden. Dadurch erhöht sich auch die Lesequalität.

Der Abstand der oberen Antenne 56 kann variabel gewählt werden und hängt insbesondere von der Reichweite der Antenne ab. Der Abstand sollte so gewählt werden, dass die Artikel 4 auch senkrecht auf dem Band 54 stehend durch das Lesegerät 7 gefahren werden können.

Das Lesegerät 7 ist mit dem in Fig. 8 nicht dargestellten Lagerverwaltungssystem über nicht dargestellte Signalleitungen verbunden, wie z.B. über einen Profibus. Wird ein Transponder durch das Lesegerät 7 gefahren, gibt das Lesegerät 7 ein Signal an das Lagerverwaltungssystem aus. Gegebenenfalls kann der Transponder nach erfolgter Detektion auch aus dem Warenstrom aussortiert werden, um erneut in einem A-Frame verwendet zu werden.

Indem man zweiflächige Antennen 56 und 58 verwendet, ist sichergestellt, dass ein Transponder auf jeden Fall bei der Durchfahrt durch das Lesegerät 7 detektiert wird. Selbst wenn der Transponder unter einem Berg von Artikeln begraben ist, existiert eine sehr große Wahrscheinlichkeit, dass eine der Richtantennen des Transponders zumindest mit einer der Antennen 56 oder 58 kommunizieren kann.

## Patentansprüche

1. Verfahren zum Kommissionieren von Waren (4) unterschiedlicher Warensorten und jeweils unterschiedlicher Produktionschargen, bei dem die Waren (4) jeweils sortenrein in Abgabevorrichtungen (2) stapelförmig gelagert, den Abgabevorrichtungen (2) gemäß eines Kommissionierauftrages entnommen und zu einer Ausgabestelle (5) befördert werden, wobei die Entnahme der Waren (4) aus der Abgabevorrichtung (2) von einem Stapelende erfolgt, und die Zufuhr der Waren zur Abgabevorrichtung zum jeweils anderen Stapelende, **dadurch gekennzeichnet, dass** bei einem Wechsel der Produktionscharge der Waren (4) entlang des Stapels nur die erste Ware (4) der neuen Produktionscharge mit einem Signalgeber (8) versehen wird, der mit einem entlang des Beförderungsweges zwischen der Abgabevorrichtung (2) und der Ausgabestelle (5) angeordneten Lesegeräts (7) zusammenwirkt, wobei bei Detektion des Signalgebers (8) einer Ware eines Warensorte durch das Lesegerät (7) der entsprechende Kommissionierauftrag einer Kontrollstelle (6) zugeführt werden kann, wenn bei dem entsprechenden Kommissionierauftrag mehrere Waren (4) der entsprechenden Warensorte entnommen wurden.

2. Verfahren zum Kommissionieren von Waren (4) nach Anspruch 1, **dadurch gekennzeichnet, dass** die Waren (4) vor der Zufuhr zur jeweiligen Abgabevorrichtung (2) mit einer Sortenkennung zur Identifizierung der Warensorte versehen werden, und der Signalgeber (8) von einem elektronischen Verwaltungssystem einer Sortenkennung zugeordnet wird, wobei bei Detektion des Signalgebers (8) die entsprechende Sortenkennung vom Verwaltungssystem ermittelt und der Kontrollstelle (6) bereitgestellt wird.

3. Verfahren zum Kommissionieren von Waren (4) nach Anspruch 2, **dadurch gekennzeichnet, dass** die Waren (4) vor der Zufuhr zur jeweiligen Abgabevorrichtung (2) zusätzlich mit einer Chargenkennung zur Identifizierung der Produktionscharge versehen werden, wobei das elektronische Verwaltungssystem bei der Zufuhr neuer Waren (4) zur jeweiligen Abgabevorrichtung (2) die Chargenkennung der zuzuführenden Waren (4) mit jenen der in der Abgabevorrichtung (2) bereits vorhandenen Waren (4) vergleicht, und das Vorliegen unterschiedlicher Produktionschargen signalisiert.

4. Verfahren zum Kommissionieren von Waren (4) nach Anspruch 3, **dadurch gekennzeichnet, dass** bei Detektion des Signalgebers (8) die entsprechende Sortenkennung sowie die entsprechende Chargenkennung vom Verwaltungssystem ermittelt und der Kontrollstelle (6) bereitgestellt wird.

5. Verfahren zum Kommissionieren von Waren (4) nach einem der Ansprüche 2 bis 4, **dadurch gekennzeichnet, dass** die Abgabevorrichtungen (2) jeweils mit einer Automatenkennung versehen werden, wobei das elektronische Verwaltungssystem eine Zuordnung zwischen der Automatenkennung und der Sortenkennung der in der betreffenden Abgabevorrichtung (2) gelagerten Warensorte vornimmt.

6. Verfahren zum Kommissionieren von Waren (4) nach Anspruch 5, **dadurch gekennzeichnet, dass** bei der Zufuhr neuer Waren (4) zu einer Abgabevorrichtung (2) und bei der Entnahme von Waren (4) aus dieser Abgabevorrichtung (2) dem elektronischen Verwaltungssystem die entsprechenden Stückzahlen übermittelt werden, wobei das Unterschreiten einer Mindestanzahl von Waren (4) in dieser Abgabevorrichtung (2) unter Angabe der entsprechenden Automatenkennung signalisiert wird.

7. Verfahren zum Kommissionieren von Waren (4) nach einem der Ansprüche 3 bis 6, **dadurch gekennzeichnet, dass** die Waren (4) vor der Zufuhr zur Abgabevorrichtung (2) in Vorratsregalen (1) gelagert werden, die jeweils mit einer Regalkennung versehen werden, wobei das elektronische Verwaltungssystem eine Zuordnung zwischen der Regalkennung sowie der Sorten- und Chargenkennung der in dem betreffenden Vorratsregal (1) gelagerten Waren (4) vornimmt.

8. Verfahren zum Kommissionieren von Waren (4) nach Anspruch 7, **dadurch gekennzeichnet, dass** bei der Zufuhr neuer Waren (4) von einem Vorratsregal (1) zu einer Abgabevorrichtung (2) die entsprechende Regal- und Automatenkennung - dem elektronischen Verwaltungssystem übermittelt wird, das aus der Regalkennung die Sorten- und Chargenkennung und aus der Automatenkennung die Chargenkennung der in der Abgabevorrichtung (2) bereits vorhandenen Waren (4) ermittelt, und das Vorliegen unterschiedlicher Produktionschargen signalisiert.

9. Verfahren zum Kommissionieren von Waren nach einem der Ansprüche 1 bis 8, **dadurch gekennzeichnet, dass** als Signalgeber (8) ein RFID-Transponder verwendet wird.

10. Verfahren zum Kommissionieren von Waren nach einem der Ansprüche 2 bis 9, **dadurch gekennzeichnet, dass** als Sortenkennung ein Strichcode-Etikett bzw. der von ihm abgeleitete Zahlencode verwendet wird.

11. Verfahren zum Kommissionieren von Waren nach einem der Ansprüche 3 bis 10, **dadurch gekennzeichnet, dass** als Chargenkennung ein Strichcode-Etikett bzw. der von ihm abgeleitete Zahlencode verwendet wird.

12. Verfahren zum Kommissionieren von Waren nach einem der Ansprüche 5 bis 11, **dadurch gekennzeichnet, dass** als Automatenkennung ein Strichcode-Etikett bzw. der von ihm abgeleitete Zahlencode verwendet wird.

13. Verfahren zum Kommissionieren von Waren nach einem der Ansprüche 7 bis 12, **dadurch gekennzeichnet, dass** als Regalkennung ein Strichcode-Etikett bzw. der von ihm abgeleitete Zahlencode verwendet wird.

## Claims

1. A method for order-picking of goods (4) of different kinds of goods and respectively different production batches, wherein the goods (4) are respectively stored in dispensing devices (2) in a stacked manner by one sort only, wherein the goods (4) are removed from the dispensing devices (2) in accordance with a picking order and conveyed to an output location (5), wherein the removal of the goods (4) from the dispensing device (2) happens from an end of a stack of goods and the feeding of the goods to the dispensing device happens at the respectively other end of the stack of goods, **characterized in that** only the first good (4) of a new production batch along the stack is provided with a signaller, when the production batch of goods is changed, wherein the signaller cooperates with a reading device (7) which is arranged along a conveying path between the dispensing device (2) and the output location (5), wherein the picking order, which corresponds to the detection of the signaller of a good of a kind of good by means of the reading device (7), can be supplied to a check location (6) if several goods (4) of the corresponding kind of goods have been removed with the corresponding picking order.

2. The method for order-picking of goods (4) according to claim 1, **characterized in that** the goods (4) are provided with a kind code for identifying the kind of goods before being supplied to the respective dispensing device (2), and the signaller (8) is assigned a kind code by means of an electronic administration system, wherein the corresponding kind code is determined by the administration system and provided to the check location (6) if the signaller (8) is detected.

3. The method for order-picking of goods (4) according to claim 2, **characterized in that** the goods (4) are additionally provided with a batch code for identifying the production batch before being supplied to the respective dispensing device (2), wherein the electronic administration system compares the batch code of the to-be-supplied goods (4) with the ones of the goods (4) already existing in the dispensing device if new goods (4) are supplied to the respective dispensing device (2), and signals the existence of different production batches.

4. The method for order-picking of goods (4) in accordance with claim 3, **characterized in that** the corresponding kind code as well as the corresponding batch code are determined by the administration system and provided to the check location (6) if the signaller (8) is detected.

5. The method for order-picking of goods (4) in accordance with one of the claims 2 to 4, **characterized in that** the dispensing devices (2) are respectively provided with an automaton code, wherein the electronic administration system performs an assignment between the automaton code and the kind code of the kind of goods being stored in the corresponding dispensing device (2).

6. The method for order-picking of goods (4) in accordance with claim 5, **characterized in that** the corresponding number of pieces is transmitted to the electronic administration system if new goods (4) are supplied to the dispensing device (2) or if goods (4) are removed from this dispensing device (2), wherein falling below a minimum number of goods (4) in this dispensing device (2) is signalled together with an indication of the corresponding automaton code.

7. The method for order-picking of goods (4) in accordance with one of the claims 3 to 6, **characterized in that** the goods (4) are stored in storage racks (1) before being supplied to the dispensing device (2), the storage racks being respectively provided with a rack code, wherein the electronic administration system performs an assignment between the rack code as well as the kind and batch codes of the goods (4) being stored in the corresponding storage rack (1).

8. The method for order-picking of goods (4) in accordance with claim 7, **characterized in that** the corresponding rack and automaton codes are transmitted to the electronic administration system if new goods (4) are supplied from the storage rack (1) to the dispensing device (2), the electronic administration system determining the kind and production codes from the rack code and the batch code from the automaton code of the goods (4) already present in the dispensing device (2), wherein the presence of different production batches is signalled.

9. The method for order-picking of goods in accordance with one of the claims 1 to 8, **characterized in that** an RFID transponder is used as the signaller (8).

10. The method for order-picking of goods in accordance with one of the claims 2 to 9, **characterized in that** a bar code label, or a number code derived therefrom, is used as the kind code.

11. The method for order-picking of goods in accordance with one of the claims 3 to 10, **characterized in that** a bar code label, or a number code derived therefrom, is used as the batch code.

12. The method for order-picking of goods in accordance with one of the claims 5 to 11, **characterized in that** a bar code label, or a number code derived therefrom, is used as the automaton code.

13. The method for order-picking of goods in accordance with one of the claims 7 to 12, **characterized in that** a bar code label, or a number code derived therefrom, is used as the rack code.

## Revendications

1. Procédé de préparation de commandes de marchandises (4) provenant de différentes catégories de marchandises et de différentes charges de production respectivement, dans lequel les marchandises (4) sont respectivement disposées de façon empilée par catégories dans des dispositifs de livraison (2), sorties des dispositifs de livraison (2) en fonction d'une demande de préparation de commande et transportées à un point de distribution (5), le retrait des marchandises (4) hors du dispositif de livraison (2) se produisant à partir d'une extrémité de la pile et l'amenée des marchandises au dispositif de livraison se faisant respectivement au niveau de l'autre extrémité de la pile, **caractérisé en ce qu'**en cas de changement dans la charge de production des marchandises (4) le long de la pile, seule la première marchandise (4) de la nouvelle charge de production est pourvue d'un transmetteur de signaux (8) qui interagit avec un appareil de lecture (7) disposé le long de la trajectoire d'acheminement entre le dispositif de livraison (2) et le point de distribution (5), sachant qu'en cas de détection du transmetteur de signaux (8) d'une marchandise d'une catégorie de marchandise donnée par l'appareil de lecture (7), la demande de préparation de commande correspondante peut être amenée à un point de contrôle (6), lorsque pour la demande de préparation de commande correspondante plusieurs marchandises (4) de la catégorie de marchandise correspondante ont été prélevées.

2. Procédé de préparation de commandes de marchandises (4) selon la revendication 1, **caractérisé en ce que** les marchandises (4) sont pourvues avant l'amenée au dispositif de livraison (2) respectif d'un élément de marquage de catégorie pour l'identification de la catégorie de marchandise et que le transmetteur de signaux (8) est associé, par un système de gestion électronique, à un élément de marquage de catégorie, sachant qu'en cas de détection du transmetteur de signaux (8), l'élément de marquage de catégorie correspondant est déterminé par le système de gestion et que le point de contrôle (6) est préparé.

3. Procédé de préparation de commandes de marchandises (4) selon la revendication 2, **caractérisé en ce que** les marchandises (4) sont en outre pourvues, avant l'amenée au dispositif de livraison (2) respectif, d'un élément de marquage de charge pour l'identification de la charge de production, le système de gestion électronique comparant, lors de l'amenée de nouvelles marchandises (4) jusqu'au dispositif de livraison (2) respectif, l'élément de marquage de charge des marchandises (4) à amener avec chacune des marchandises (4) déjà présentes dans le dispositif de livraison (2) et signalant la présence de charges de production différentes.

4. Procédé de préparation de commandes de marchandises (4) selon la revendication 3, **caractérisé en ce qu'**en cas de détection du transmetteur de signaux (8), l'élément de marquage de catégorie correspondant ainsi que l'élément de marquage de charge correspondant sont déterminés par le système de gestion déterminé et que le point de contrôle (6) est préparé.

5. Procédé de préparation de commandes de marchandises (4) selon l'une quelconque des revendications 2 à 4, **caractérisé en ce que** les dispositifs de livraison (2) sont respectivement pourvus d'un élément de marquage d'automate, le système de gestion électronique réalisant un appariement entre l'élément de marquage d'automate et l'élément de marquage de catégorie de la catégorie de marchandise disposée dans le dispositif de livraison (2) correspondant.

6. Procédé de préparation de commandes de marchandises (4) selon la revendication 5, **caractérisé en ce qu'**en cas d'amenée de nouvelles marchandises (4) à un dispositif de livraison (2) et en cas de retrait de marchandises (4) hors de ce dispositif de livraison (2), les nombres de pièces correspondants sont transmis au système de gestion électronique, le passage en dessous d'un nombre minimal de marchandises (4) dans ce dispositif de livraison (2) étant signalé à l'aide de l'élément de marquage d'automate correspondant.

7. Procédé de préparation de commandes de marchandises (4) selon l'une quelconque des revendications 3 à 6, **caractérisé en ce que** les marchandises (4) sont disposées, avant l'amenée au dispositif de livraison (2), sur des étagères de stockage (1) respectivement pourvues d'un élément de marquage d'étagère, le système de gestion électronique réalisant un appariement entre l'élément de marquage d'étagère et l'élément de marquage de catégorie et de charge des marchandises (4) disposées sur l'étagère de stockage (1) concernée.

8. Procédé de préparation de commandes de marchandises (4) selon la revendication 7, **caractérisé en ce que** lors de l'amenée de nouvelles marchandises (4) d'une étagère de stockage (1) à un dispositif de livraison (2), l'élément de marquage d'étagère et d'automate correspondant est transmis au système de gestion électronique qui détermine à partir de l'élément de marquage d'étagère l'élément de marquage de catégorie et de charge et à partir de l'élément de marquage d'automate l'élément de marquage de charge des marchandises (4) déjà présentes dans le dispositif de livraison (2) et signale la présence de charges de production différentes.

9. Procédé de préparation de commandes de marchandises selon l'une quelconque des revendications 1 à 8, **caractérisé en ce que** le transmetteur de signaux (8) utilisé est un transpondeur RFID.

10. Procédé de préparation de commandes de marchandises selon l'une quelconque des revendications 2 à 9, **caractérisé en ce que** l'élément de marquage de catégorie utilisé est une étiquette à code barres et/ou le code en chiffres correspondant.

11. Procédé de préparation de commandes de marchandises selon l'une quelconque des revendications 3 à 10, **caractérisé en ce que** l'élément de marquage de charge utilisé est une étiquette à code barres et/ou le code en chiffres correspondant.

12. Procédé de préparation de commandes de marchandises selon l'une quelconque des revendications 5 à 11, **caractérisé en ce que** l'élément de marquage d'automate est une étiquette à code barres et/ou le code en chiffres correspondant.

13. Procédé de préparation de commandes de marchandises selon l'une quelconque des revendications 7 à 12, **caractérisé en ce que** l'élément de marquage d'étagère est une étiquette à code barres et/ou le code en chiffres correspondant.
